# EUROPEAN PATENT APPLICATION

(11) **EP 1 852 809 A1**
(43) Date of publication of application: **07.11.2007**
(21) Application number: 05806717.4
(22) Date of filing: 15.11.2005
(51) Int. Cl.: G06K 19/06

(54) **CHARACTER STRING SYMBOL GENERATING DEVICE, CHARACTER STRING SYMBOL GENERATING METHOD, AND STORAGE MEDIUM STORING CHARACTER STRING SYMBOL PROGRAM**

(30) Priority: 24.01.2005 JP 2005016028
(71) Applicant: Global Value Corporation, 1-4, Shinjuku 2-chome Shinjuku-ku Tokyo 160-0022 (JP)
(72) Inventor: OWADA, Hiroshi, c/o GLOBAL VALUE CORPORATION, Tokyo; 1600022 (JP)
(74) Representative: Skone James, Robert Edmund
(86) International application number: PCT/JP2005/021325
(87) International publication number: WO 2006/077687

(57) **Abstract**

With a view to generate a code of which the user can easily make a copy even though information is encoded, which employs characters which allows the user to convey the encoded contents thereof to others and which can be read at high speeds by a reading apparatus such as a scanner, there is provided a character string symbol generation system for generating a character string symbol which is made up of a plurality of rows of character strings which comprises a conversion means for generating a character string from numerical information, a mark character inserting means for inserting corner mark characters of which are inserted in a first and last position and in predetermined intermediate positions of a character string generated by the conversion means, a character string dividing means for dividing the character string into which the corner mark characters are inserted by the mark character inserting means into a plurality of character strings, and generating a character string symbol for aligning the character strings which are divided by the character string dividing means into a square formation, so as to generate a character string symbol in which the corner mark characters are disposed in four corners of the square formation of the character strings.

## Description

### Technical Field

The present invention relates to a system for generating a symbol made up of a character string or character strings, a character string symbol generation method and a storage medium which stores therein a character string symbol generation program.

### Background Art

Conventionally, as is disclosed in the Japanese Unexamined Patent Publication No. 2003-317051 entitled "Dynamic Bar Code Display System, Dynamic Bar Code Generation Method and Storage Unit for Generating Dynamic Bar Code," there has been a bar code which is difficult to be copied due to the bar code being displayed in a dynamic fashion. Because of this, the contents of the bar code itself have been unable to be orally conveyed to others or to be photographed by a camera or the like so as to be handed over to others. In addition, a conventional QR code (two-dimensional bar code) has not been such as to be orally conveyed to others.

Then, a new code has been desired of which the user can easily make a copy even though information is encoded, which allows the user to convey orally the encoded contents thereof to others and which can be read by a reading apparatus such as a scanner.

### Disclosure of the Invention

Then, the present invention has been made in view of the situations relating to the problems inherent in the related art, and an object there of is to provide a system, a method and a storage medium which can generate a code of which the user can easily make a copy even though information is encoded, which employs characters which allows the user to convey the encoded contents thereof to others and which can be read at high speeds by a reading apparatus such as a scanner.

According to an invention set forth in Claim 1, there is provided a character string symbol generation system for generating a character string symbol which is made up of a plurality of rows of character strings, characterized by comprising a conversion means for generating a character string from numerical information, a mark character inserting means for inserting a total of four corner mark characters of which two are inserted in a first and last position and two in predetermined intermediate positions of a character string generated by the conversion means, a character string dividing means for dividing the character string into which the corner mark characters are inserted by the mark character inserting means into a plurality of character strings of the same number of characters, and a character string symbol generation means for aligning the character strings which are divided by the character string dividing means into a square formation, so as to generate a character string symbol in which the corner mark characters are disposed in four corners of the square formation of the character strings so aligned.

According to an invention set forth in Claim 2, there is provided a character string symbol generation system as set forth in Claim 1, characterized in that the mark character inserting means inserts a configuration identification character which indicates a type of a character string symbol in a predetermined position of the character string generated by the conversion means together with the mark characters.

According to an invention set forth in Claim 3, there is provided a character string symbol generation system as set forth in Claim 1 or 2, characterized by comprising further a display means for displaying the character string symbol by a font of equal width in such a way that all characters of the character string symbol become constant in character width and displaying a row pitch which is an interval between rows of character strings and a character pitch which is an interval between a character and a character in each character string in the same width.

According to an invention set forth in Claim 4, there is provided a character string symbol generation system as set forth in Claim 3, characterized in that the display means also performs a display in which a blank space equal to a single character is further provided on the perimeter of the character string symbol generated.

According to inventions set forth in Claims 5 and 6, there is provided a character string symbol generation system as set forth in Claims 1 and 3, respectively, characterized in that the conversion means generates a character string using hiragana characters.

According to inventions set forth in Claims 7 to 10, there is provided a character string symbol generation system as set forth in Claims 1, 2, 3, and 6, respectively, characterized in that the mark character inserting means inserts a triangular mark painted black as the corner mark character and the configuration identification character.

According to an invention set forth in Claim 11, there is provided a character string generation method for generating a character string symbol which is made up of a plurality of rows of character strings, characterized by comprising a conversion step of generating a character string from numerical information, a mark character inserting step of inserting a total of four corner mark characters of which two are inserted in a first and last position and two in predetermined intermediate positions of a character string generated in the conversion step, a character string dividing step of dividing the character string into which the corner mark characters are inserted in the mark character inserting step into a plurality of character strings of the same number of characters, and a character string symbol generation step of aligning the character strings which are divided in the character string dividing step into a square formation, so as to generate a character string symbol in which the corner mark characters are disposed in four corners of the square formation of the character strings so aligned.

According to an invention set forth in Claim 12, there is provided a character string symbol generation method as set forth in Claim 11, characterized in that in the mark character inserting step, a configuration identification character which indicates a type of a character string symbol is inserted in a predetermined position of the character string generated in the conversion step together with the corner mark characters.

According to an invention set forth in Claim 13, there is provided a character string symbol generation method as set forth in Claim 11 or 12, characterized by comprising further a display step of displaying the character string symbol by a font of equal width in such a way that all characters of the character string symbol become constant in character width and displaying a row pitch which is an interval between rows of character strings and a character pitch which is an interval between a character and a character in each character string in the same width.

According to an invention set forth in Claim 14, there is provided a character string symbol generation method as set forth in Claim 13, characterized in that in the display step, a display is performed in which a blank space equal to a single character is further provided on the perimeter of the character string symbol generated.

According to inventions set forth in Claims 15 and 16, there is provided a character string symbol generation method as set forth in Claim 11 or 13, respectively, characterized in that in the conversion step, a character string is generated using hiragana characters.

According to inventions set forth in Claims 17 to 20, there is provided a character string symbol generation method as set forth in Claims 11, 12, 13, and 16, respectively, characterized in that in the mark character inserting step, a triangular mark painted black is inserted as the corner mark character and the configuration identification character.

According to an invention set forth in Claim 21, there is provided a storage medium which stores therein a character string generation program for generating a character string symbol which is made up of a plurality of rows of character strings, characterized by comprising a conversion program for generating a character string from numerical information, a mark character inserting program for inserting a total of four corner mark characters of which two are inserted in a first and last position and two in predetermined intermediate positions of a character string generated by the conversion program, a character string dividing program of dividing the character string into which the corner mark characters are inserted by the mark character inserting program into a plurality of character strings of the same number of characters, and a character string symbol generation program of aligning the character strings which are divided by the character string dividing program into a square formation, so as to generate a character string symbol in which the corner mark characters are disposed in four corners of the square formation of the character strings so aligned.

According to an invention set forth in Claim 22, there is provided a storage medium as set forth in Claim 21, characterized in that the mark character inserting program inserts a configuration identification character which indicates a type of a character string symbol in a predetermined position of the character string generated by the conversion program together with the corner mark characters.

According to an invention set forth in Claim 23, there is provided a storage medium as set forth in Claim 21 or 22, characterized by comprising further a display program for displaying the character string symbol by a font of equal width in such a way that all characters of the character string symbol become constant in character width and displaying a row pitch which is an interval between rows of character strings and a character pitch which is an interval between a character and a character in each character string in the same width.

According to an invention set forth in Claim 24, there is provided a storage medium as set forth in Claim 23, characterized in that the display program performs a display in which a blank space equal to a single character is further provided on the perimeter of the character string symbol generated.

According to inventions set forth in Claims 25 and 26, there is provided a storage medium as set forth in Claim 21 or 23, respectively, characterized in that the conversion program generates a character string using hiragana characters.

According to inventions set forth in Claims 27 to 30, there is provided a storage medium as set forth in Claims 21, 22, 23, 26, respectively, characterized in that in the mark character inserting program inserts a triangular mark painted black as the corner mark character and the configuration identification character.

Consequently, according to the inventions set forth in Claims 1, 11, 21, the system, method and storage medium for generating the code (the character string symbol) which can easily be copied by the user even though information is encoded which allows the users to convey orally the encoded contents thereof to others and can be read at high speeds by a reading apparatus such as a scanner since the range of the character string symbol is easily specified by employing the characters with which the encoded contents can be conveyed to others and disposing marks which are rarely used in sentences in a normal usage in the four corners of the group of character strings.

In addition, according to the inventions set forth in Claims 2, 12, 22, when reading the character string symbol by a camera, a scanner or the like, time to be spent determining the type of the character string symbol can be shortened by inserting the configuration identification character in the character string symbol.

Additionally, according to the inventions set forth in Claims 3, 13, 23, not only can the accuracy at which the code is read by a reading apparatus such as a scanner be enhanced but also the reading speed can be increased to high speeds by displaying the character string symbol by the font of equal width in such a way that all characters of the character string symbol become constant in character width and displaying the row pitch which is an interval between rows of character strings and the character pitch which is an interval between a character and a character in each character string in the same width.

Furthermore, according to the invention set forth in Claims 4, 14, 24, by performing the display in which a blank space equal to a single character is provided on the perimeter of the character string symbol generated, even in the event that the character string symbol is displayed in a normal sentence, discrimination between characters used in the normal sentence and characters used in the character string symbol can easily be made by providing the blank space on the perimeter of the character string symbol.

In addition, according to the inventions set forth in Claims 5, 6, 15, 16, 25, 26, the character string symbol can be made to be read even by from very young to old people by making characters used in the character string symbol be hiragana characters.

According to inventions set forth in Claims 7 to 10, 17 to 20, and 27 to 30, the reading speed can be increased to high speeds by displaying the corner mark character and the configuration identification character by the triangular mark painted black which is difficult to be used in a general sentence and which can be identified more easily than other marks even when the character string symbol is read by a scanner or the like.

### Brief Description of the Drawings

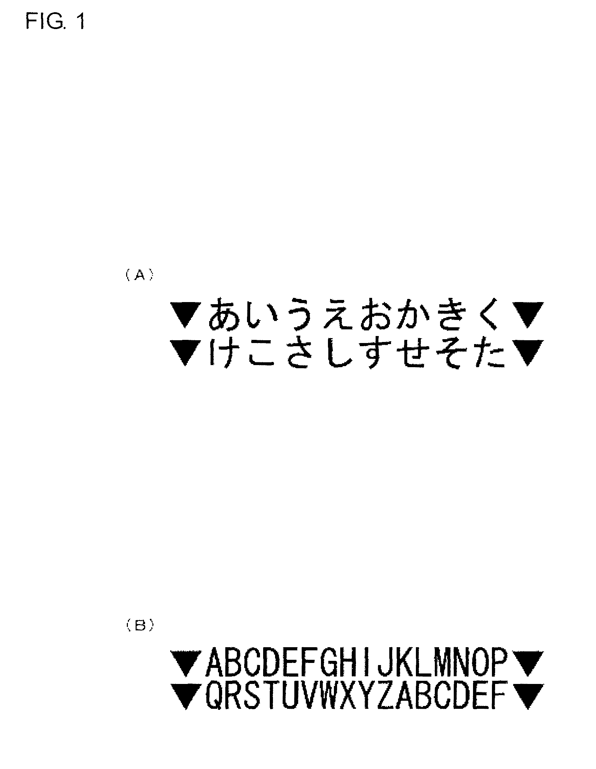

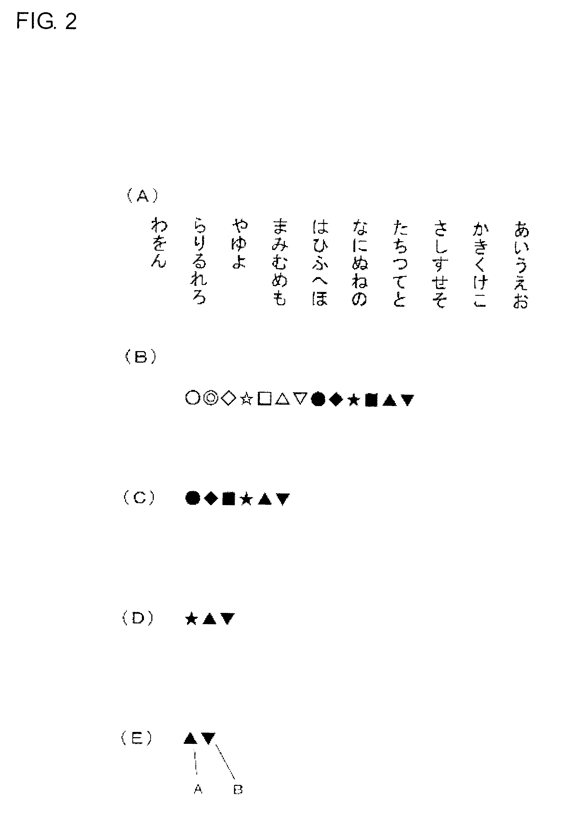

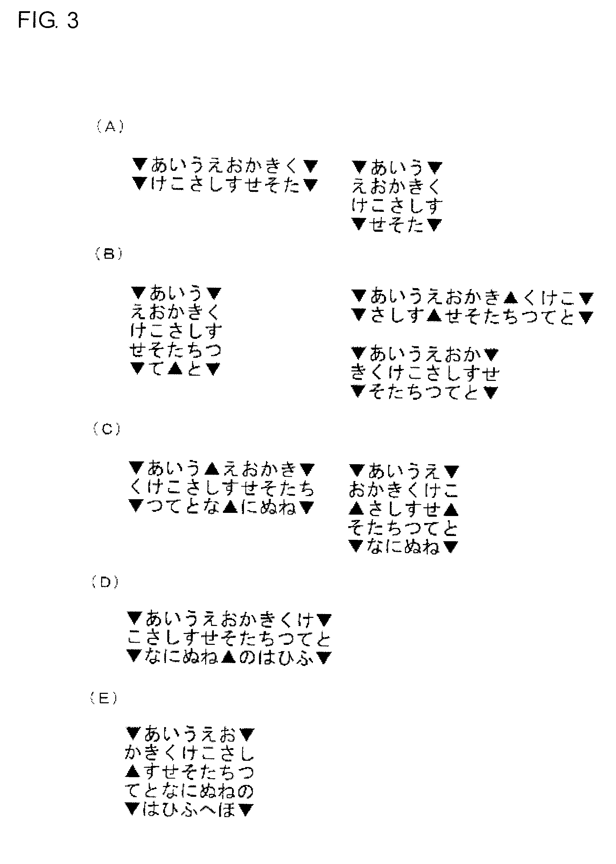

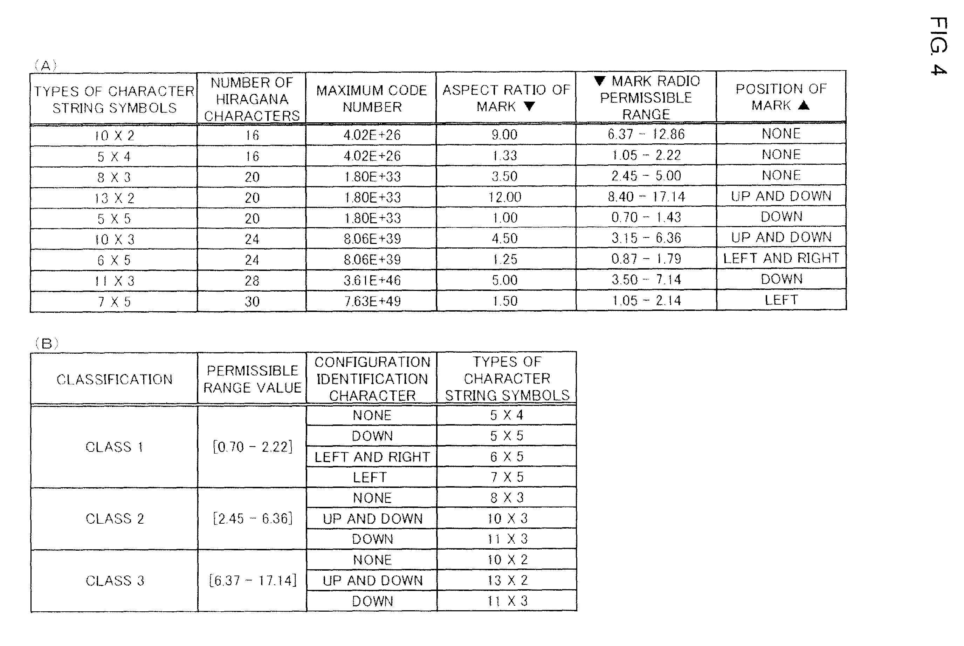

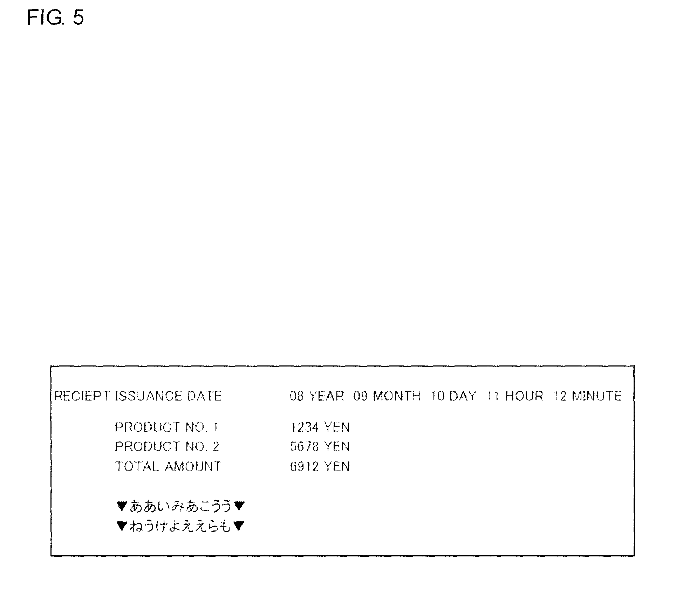

Fig. 1 is a drawing which shows character string symbols which make up an embodiment of the invention, and Fig. 2 is a drawing which shows characters and marks which are used in the character string symbol which is the embodiment of the invention. Fig. 3 is a drawing which shows types of character string symbols which make up the embodiment of the invention, Fig. 4 is a drawing which shows types and characteristics of the character string symbols which make up the embodiment of the invention, and Fig. 5 is a drawing which shows a receipt on which the character string symbol which is the embodiment of the invention is displayed.

### Best Mode for Carrying out the Invention

A best mode of the invention is a character string generation system for generating a character string symbol which is made up of a plurality of rows of character strings, characterized by comprising a conversion means for generating a character string of hiragana from numerical information, a mark character inserting means for inserting a triangular mark painted black as a total of four corner mark characters of which two are inserted in a first and last position and two in predetermined intermediate positions of a character string generated by the conversion means and inserting a triangular mark painted black as the configuration identification character in a predetermined position, a character string dividing means for dividing the character string into which the corner mark characters are inserted by the mark character inserting means into a plurality of character strings of the same number of characters, a character string symbol generation means for aligning the character strings which are divided by the character string dividing means into a square formation, so as to generate a character string symbol in which the corner mark characters are disposed in four corners of the square formation of the character strings so aligned, and a display means for displaying the character string symbol by a font of equal width in such a way that all characters of the character string symbol become constant in character width and displaying a row pitch which is an interval between rows of character strings and a character pitch which is an interval between a character and a character in each character string in the same width and displaying a blank space equal to a single character is further provided on the perimeter of the character string symbol generated.

In addition, the best mode of the invention may be a character string generation method for generating a character string symbol which is made up of a plurality of rows of character strings, characterized by comprising a conversion step of generating a character string of hiragana from numerical information, a mark character inserting step of inserting a triangular mark painted black as a total of four corner mark characters of which two are inserted in a first and last position and two in predetermined intermediate positions of a character string generated in the conversion step and inserting a triangular mark painted black as the configuration identification character in a predetermined position, a character string dividing step of dividing the character string into which the corner mark characters are inserted in the mark character inserting step into a plurality of character strings of the same number of characters, a character string symbol generation step of aligning the character strings which are divided in the character string dividing step into a square formation, so as to generate a character string symbol in which the corner mark characters are disposed in four corners of the square formation of the character strings so aligned, and a display step of displaying the character string symbol by a font of equal width in such a way that all characters of the character string symbol become constant in character width and displaying a row pitch which is an interval between rows of character strings and a character pitch which is an interval between a character and a character in each character string in the same width and displaying a blank space equal to a single character is further provided on the perimeter of the character string symbol generated.

Then, the best mode of the invention is a storage medium which stores therein a character string generation program for generating a character string symbol which is made up of a plurality of rows of character strings, characterized by comprising a conversion program for generating a character string of hiragana from numerical information, a mark character inserting program for inserting a triangular mark painted black as a total of four corner mark characters of which two are inserted in a first and last position and two in predetermined intermediate positions of a character string generated by the conversion program and inserting a triangular mark painted black as the configuration identification character in a predetermined position, a character string dividing program of dividing the character string into which the corner mark characters are inserted by the mark character inserting program into a plurality of character strings of the same number of characters, a character string symbol generation program of aligning the character strings which are divided by the character string dividing program into a square formation, so as to generate a character string symbol in which the corner mark characters are disposed in four corners of the square formation of the character strings so aligned, and a display program for displaying the character string symbol by a font of equal width in such a way that all characters of the character string symbol become constant in character width and displaying a row pitch which is an interval between rows of character strings and a character pitch which is an interval between a character and a character in each character string in the same width and displaying a blank space equal to a single character is further provided on the perimeter of character string symbol generated.

Hereinafter, an embodiment to which the invention is applied will be described by reference to the drawings. Fig. 1 shows examples of character string symbols, of which Fig. 1(A) is an example in which a character string symbol is displayed by hiragana characters, and Fig. 1(B) is an example in which a character string symbol is displayed by alphabetical characters in English. The character string symbol is a symbol which is made up of a plurality of rows, of which each is made up of a plurality of characters, and triangular characters painted black are disposed in four corners of the symbol as corner mark characters. In addition, the respective characters which are displayed as the character string symbol are displayed by a font of equal width in which characters are constant in character width, and a row pitch which is an interval between rows of characters and a character pitch is an interval between characters are displayed in the same width.

In addition, hereinafter, in this description, a regular position of a triangle painted black which is indicated by reference character A in Fig. 2(E) is represented as "Δ (biack-painted triangle)" or simply as "Δ" and an inverted position of a triangular mark indicated by reference character B in Fig. 2 (E) is represented as "∇ (black-painted triangle)" or simply as "∇."

The character string symbol is a symbol in which information by characters such as a sentence, URL, name, and address, purchase amount information when purchasing a product and information by numerical values such as telephone numbers are encoded in the form of a character string and the character string system can be used as a code which substitutes a conventional QR code (a two-dimensional bar code).

As a feature of the character string symbol, in contrast to the conventional QR code (the two-dimensional bar code) which is made up of dots and lines, the character string symbol is characterized in that since characters are used in the character string symbol, the user can easily make a copy thereof and read it. In addition, in the case of the conventional QR code, in the event that the code is picked up by a camera or the like, in some cases, information from the QR code so picked up cannot be decoded depending on pickup angles and pickup qualities. In the character string symbol, however, since characters are used, even in a situation where the pickup angle and pickup quality of the camera are not satisfied, it is characteristic of the character string symbol that it can be read. In addition, characters written in the character string symbol can be read loudly so as to convey the contents of the character string symbol over a telephone. Furthermore, characters which are displayed as the character string symbol can easily be transferred to a piece of paper or the like.

In addition, since the four corners are made up of the corner mark characters, when reading the character string symbol by a camera or the like, a range of the character string symbol can easily be extracted, whereby the character string symbol can be read at faster speeds. In addition, since characters are made up of not fine dots but straight lines and curves, the resulting character string symbol becomes too strong to be affected by distortion and inclination when the character string symbol is picked up by a camera or the like.

Fig. 2 (A) is an example of a list of characters to be used. It is convenient to use hiragana characters which do not have to be transformed into kanji characters. In the embodiment, hiragana characters of contracted sounds such as 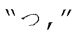 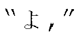 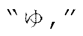 and 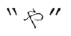 and hiragana characters to which a sonant mark 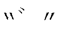 or p-sound sign "° " is attached are not included since they are difficult to be inputted when attempted to be inputted on a mobile phone or the like. Because of this, only 46 hiragana characters are used to which the sonant mark or p-sound sign is not attached and which do not include 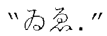 In addition, in the event that hiragana characters with the sonant or p-sound sign are also used together, about 71 characters can be used.

In addition, hiragana characters used in the character string symbol of the embodiment use the JIS kanji code (JISX0208). The invention is not limited to the JIS kanji code (JISX0208) and may use any code. Additionally, in the case of the alphabetical characters of English being used, although it is desirable to use the Unicode (UCS-2, part of JISX0221-1), character codes other than the Unicode can also be used.

Then, although there are plurality of character fonts to display the JIS kanji code (JISX0208), a character font of equal width is used because character strings are arrayed as in a table. In addition, although there are kinds of character fonts of equal width, it is desirable to use a font in Gothic type, since characters in Gothic type can clearly be identified when attempting to identify the character string symbol as an image picked up by a camera or the like. In the embodiment, the font of equal width in Gothic type is used.

Fig. 2(B) is a drawing which shows a list of marks. 13 types of marks are generally used which are marks contained in a general character font.

When the marks are recognized as images by a machine, in order to simplify the determination of marks read from an image input apparatus such as a camera and a scanner, an image is binarized into white and black and a labeling processing is performed on the binarized image. In the labeling processing in the embodiment, in the event that there exist black dots in positions in eight directions which neighbor each of black dots of the image made up of white and black dots relative to the black dot, the relevant two black dots are put into a connected state. Thereafter, the plurality of black dots which are put into the connected state are made to be a label. The image which is binarized into while and black as the result of the label processing is divided into a plurality of labels, and identification number, area, outer circumferential length and position of center of gravity are calculated for each label.

Since this label processing is performed on each character (hiragana character and mark) of the character string symbol read as the image, it is effective to select a mark which shows a value which differs largely from a value of combination of area of the label, outer circumferential length of the label and position of center of gravity of the label of each hiragana character. Since a hiragana character is made up of lines, the outer circumferential length of the label becomes larger than the area of the label. From this, it is desirable to select a mark which is thoroughly painted inside. Namely, when extracting marks which are thoroughly painted inside from the 13 types of characters, there result six types of marks which are grouped into a first extracted character group shown in Fig. 2(C).

In addition, in order to identify quickly the marks out of the first extracted character group which is made up of the extracted marks, the position of center of gravity of the label is made use of for determination of reading. Since the marks of "●◆■" are point symmetry and their centers of gravity are superposed on centers of the marks, the marks are not suitable for identification of marks. Because of this, suitable marks are restricted to three types which are grouped into a second extracted mark group shown in Fig. 2(D).

Depending on an image read, among the tree types of marks which are grouped into the second extracted mark group which are so extracted from the ratio of area to outer circumferential length and position of center of gravity, since a thin spot is easy to be generated in the mark of ★ when it is binarized and in some cases, the relevant mark is not determined as one label in label processing, it is most desirable to use corner mark characters which are made up of the marks of "Δ (black-painted triangle)" and "∇ (black-painted triangle)". In addition, since the "Δ (black-painted triangle)" and "∇ (black-painted triangle)" are marks which are asymmetrical vertically and the positions of their centers of gravity are different from each other, they can also be used to determine the direction of an image from the center of the image and the positions of centers of gravity of the marks. This "Δ (black-painted triangle)" is represented by a code number of 0x2225 in the JIS kanji code (JISX0208) and by a code number 0x25b2 in the Unicode (UCS-2, part of JISX0221-1). In addition, the "∇ (black-painted triangle)" is represented by a code number of 0x2227 in the JIS kanji code (JISX0208) and by a code number 0x25bc in the Unicode (UCS-2, part of JISX0221-1).

Fig. 3 shows examples of configurations of character string symbols which are generated by the character string generation means. Types of character string symbols are shown which use 16 to 30 characters which are converted by the conversion means. 46 hiragana characters from 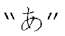 to 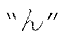 to which no sonant mark is attached are used as characters used in the character string symbol. In addition, this is an example in which the "∇ (black-painted triangle)" is used as corner mark characters disposed in four corners to indicate a drawing range of a character string symbol and the "Δ (black-painted triangle)" is used as configuration identification characters which are marks to be inserted in positions other than the four corners so as to ease the determination of a type of a character string symbol.

Fig. 3 (A) shows configuration examples of two character rows of 10 characters each and four character rows of five characters each as examples of character string symbols which are generated by adding corner mark characters and configuration identification characters to 16 hiragana characters. Fig. 3(B) shows configuration examples of five character rows of five characters each, two character rows of 13 characters each and three character rows of eight characters each as examples of character string symbols generated by adding corner mark characters and configuration identification characters to 20 hiragana characters. Fig. 3(C) shows configuration examples of three character rows of 10 characters each and five character rows of six characters each as examples of character string symbols generated by adding corner mark characters and configuration identification characters to 24 hiragana characters. Fig. 3(D) shows a configuration example of three character rows of 11 characters each as an example of a character string symbol generated by adding corner mark characters and configuration identification characters to 28 hiragana characters. Fig. 3(E) shows a configuration example of five character rows of seven characters each as an example of a character string symbol generated by adding corner mark characters and configuration identification characters to 30 hiragana characters. As has been described heretofore, the configuration examples which are different in the numbers of character rows and characters for each row are prepared even for the character string symbol of the same number of characters, the types of character string symbols are made to be selected according to the configurations of character string symbols used. In addition, the invention does not have to be limited to the configurations, and hence, character string symbols of various sizes can be configured.

In addition, as is shown in Fig. 3, in the character string symbols generated, a character font of equal character width is used, and as with character pitch, a line feeding pitch (character height) is also generated by the character string generation means. In addition, by providing a blank space equal to one character (of two bytes) on the perimeter of the character string symbol, in the event that the character string symbol is disposed in a normal sentence or the like, the character string symbol can be discriminated from other characters.

In addition, although in this example, the different characters are used for the corner mark characters "∇ (black-painted triangle)" which are disposed in the four corners and the configuration identification characters "Δ (black-painted triangle)," the mark of the configuration identification characters is identified by a ratio of area to outer circumferential length in the group of labels by performing a label processing when characters are read. Because of this, since the corner mark characters disposed in the four corners and other characters can be classified by making use of their disposing characteristics, the same characters as those of the corner mark characters can be used as the configuration identification characters.

Fig. 4(A) is a drawing which shows the characteristics of the types of character string symbols shown in Fig. 3. Note that this drawing is an example in which the height of each character and the width of a character are made the same. Shown in the drawing which shows the characteristics are types of character string symbols, the number of hiragana characters, a maximum code number, aspect ratio of "∇ (black-painted triangle)," "∇ " mark ratio permissible range, and characteristics of the position of "Δ (black-painted triangle) "mark. The type of character string symbol is a type of character string symbol corresponding to the number of hiragana characters. The number of hiragana characters is the number of characters which are generated when numerical information is converted by the conversion means. The maximum code number is a maximum number of numerical values which can be represented by a character string symbol. The aspect ratio of "∇" mark indicates an aspect ratio of the positions of "∇" marks in the four corners of the relevant character string symbol. The "∇" mark ratio permissible range indicates a permissible range of deviation of the "∇" marks from the aspect ratio of the original positions of the "∇" mark in the four corners which would occur in the event that a character string symbol is picked up at an inclined angle when reading the "∇" marks as images by a machine. The "Δ" mark position indicates where in the character string symbol the "Δ" mark, which is the configuration identification character, is used other than the "∇" marks in the four corners of the character string symbol.

In addition, as is shown in Fig. 4 (B), as to character string symbols whose aspect ratios of the "∇" marks are in substantially the same permissible range, the configuration identification characters are inserted in such a way that the character string symbols can be discriminated from each other by the existence of configuration identification characters or different positions thereof. In the drawing, numerical values for "∇" mark aspect ratio are values resulting from calculations, and "∇" mark ratio permissible ranges are permissible ranges with a distortion generated when the marks are actually picked up taken into consideration. By adopting this configuration, when attempting to read a character string symbol by a machine, the classification can be made to be determined from the aspect ratio of the corner mark characters disposed in the four corners and furthermore, and furthermore, the type of a character string symbol can be made to be determined by the existence or positions of the configuration identification characters.

In addition, a character string symbol generation system is made up of a conversion means, a mark character inserting means, a character string dividing means, a character string symbol generation means and a display means and is a mobile phone or a computer which can execute programs.

This conversion means converts numerical information into a numeral of base N system and thereafter replaces the numerical information which is converted into the numeral of base N system with characters, so as to convert the numerical information into a character string made up of a plurality of characters. The mark character inserting means inserts a total of four corner mark characters of which two are inserted in a first and last position and two in predetermined intermediate positions of a character string generated by the conversion means and also inserts a configuration identification character in a predetermined position. The character string dividing means divides the character string into which the corner mark characters and the configuration identification character are inserted by the mark character inserting means. The character string symbol generation means aligns the character strings which are divided by the character string dividing means, so as to generate a character string symbol. Next, the display means displays the character string symbol generated by the character string generation means. In addition, the display means also performs a display in which a blank space equal to one character is disposed for display on the outer circumference of the character string symbol according to the configuration in which the character string symbol is used.

In addition, a storage medium which stores therein programs for generating a character string symbol is made up of a conversion program, a mark character inserting program, a character string dividing program, a character string symbol generation program, and a display program, and these programs are stored in the storage medium. In addition, the storage medium is a semiconductor memory or a magento-optic storage medium or the like, and this storage medium is a storage medium which is incorporated in advance in a computer or a storage medium which is provided detachably from the computer.

Hereinafter, the flow of a character string symbol generation method will be described.

A character string symbol is generated by completing the following steps in the order of a numerical conversion step, a type selection step, a conversion step, a mark character inserting step, a character string dividing step, a character string symbol generation step, and a display step.

Firstly, the numerical conversion step is a step of converting original information into a numerical value. This original information may be any type of information. Information by characters such as character information, URL, name and address, purchase amount information when purchasing a product and information by numerical values such as telephone numbers can be used, and information by characters is replaced with a numerical value for numerical conversion of information.

Next, the type selection step is a step of selecting a type of a character string symbol to be generated based on the numerically converted numerical information. Whether or not the numerical information which was numerically converted in the numerical conversion step exceeds a maximum numerical value is determined. In the embodiment, 7.63E + 49 is a maximum numerical value. If the numerically converted numerical information exceeds the maximum numerical value, the process is ended without generating a character string symbol. If not, a type of a character string symbol is selected according to digits in length of the numerical information. A type of character string symbol is selected which allows the use of digits which are larger in length than the digits of the numerically converted numerical information.

Next, the conversion step is a step of expressing the selected character string symbol in a base N system based on the numerical information which was numerically converted in the numerical conversion step in such a manner that the length of digits becomes the same as the number of characters used in the selected character string symbol. When generating a character string symbol using 46 hiragana characters, the selected character string symbol is expressed in a base 46 system. In expressing the numerical information in the base N system, in the event that the length of digits is insufficient, "0" is appropriately added to the leading digit for conversion. In addition, in the case in English, when using only the 26 alphabetical characters of upper case, the numerical information is expressed in a base 26 system, and when including the alphabetical characters of lower case together, the numerical information is expressed in a base 52 system.

Next, the numerical information expressed in the base N system is replaced with characters which correspond to numerical values so as to be converted into a character string symbol. For example, when using the 46 hiragana characters, "0" to "45" are replaced with 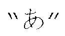 to 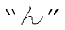 so as to convert the numerical information into a character string.

Next, the mark character inserting step is a step of inserting the corner mark characters and the configuration identification characters into the character string generated in the conversion step. The corner mark characters are inserted in first and last positions and predetermined intermediate positions of the character string so as to be disposed in four corners of a character string symbol when the character string symbol is generated. In addition, the corner mark characters are inserted into the character string as the configuration identification characters according to the type of the character string symbol that was selected in the type selection step. As an inserting example, in an example of a character string symbol of 10 × 2 (two rows of 10 characters each) which uses 16 hiragana characters, the corner mark characters are inserted in a leading position and a tail position of the character string made up of 16 hiragana characters, and the corner mark characters are also inserted after the eighth character and in front of the ninth character, respectively, whereby a total of four corner mark characters are inserted.

In addition, in an example of a character string symbol of 7 × 5 (five rows of seven characters each) which uses 30 hiragana characters, the corner mark characters are inserted in a leading position and a tail position of the character string made up of 30 hiragana characters, and the corner mark characters are also inserted after the fifth character and in front of the twenty-sixth character, respectively, whereby a total of four corner mark characters are inserted. Furthermore, in the example of the character string symbol of 7 × 5, in addition to the corner mark characters, the configuration identification characters are inserted, and the configuration identification character is inserted in front of the thirteenth character. As to this configuration identification character, the inserting position of the configuration identification character is fixed for each of configurations of character string symbols as is shown in Figs. 3 and 4.

Next, the character string dividing step is a step of dividing a character string into which the corner mark and configuration identification characters are inserted. A character string is divided so as to realize the type of character string symbol which was selected in the type selection step. In the example of the character string symbol of 10 × 2, after the corner mark characters and the configuration identification characters have been inserted thereinto, the character string is divided after the tenth character into two character strings.

In addition, in the example of the character string symbol of 7 × 5, after the corner mark characters and the configuration identification characters have been inserted thereinto, the character string is divided after the seventh character, the fourteenth character, the twenty-first character, and the twenty-eighth character into five character strings.

Next, the character string symbol generation step is a step of aligning the character strings which were divided in the character string dividing step, so as to generate a character string symbol. The generation of a character string symbol is performed by aligning vertically the character strings which were divided in the character string dividing step.

Next, the display step is a step of display the character string symbol which was generated in the character string symbol generation step. Characters in each character string are displayed by a font of equal width in such a manner that all the characters are constant in width, and a row pitch between the respective character strings and a character pitch between the characters in the respective character strings are displayed in the same width. In addition, a blank space equal to a single character is disposed on the perimeter of the character according to a configuration in which the character string symbol is used. For example, when the character string symbol is used in a normal sentence, since characters used in the normal sentence and characters used in the character string symbol are mixed, a blank space equal to a single character is displayed on the perimeter of the character string symbol.

In addition, the sequence of the character string dividing step and the mark character inserting step may be reversed. The generation of a character string symbol can be performed by following the flow in this way.

An example will be described in which a character string symbol is generated.

A case will be described in which a receipt containing a character string symbol is generated in a normal POS register. In this example, information that is encoded into a character string symbol is a total amount, a receipt issuance date which contains information on time and a check code. Numerical information made up of a total of 26 digits is produced, of which eight digits are assigned for the total amount, 10 digits for the receipt issuance date which includes time and eight digits for the check code.

The type of character string symbol used in this example is a character string symbol of 10 × 2, which is made up of 16 hiragana characters, and characters used are 46 characters to which no sonant mark is attached. The number of signs that can be represented by this character string symbol is 10²⁶. From this fact, as the total amount, an amount of up to 99999999 yen can be represented by eight decimal digits. In addition, the receipt issuance data is represented by ten decimal digits, and an issuance date up to 23 hours 59 minutes, December 31, '99 can be represented. The check code is made up of eight decimal digits. The check code of this example is used for simple encoding and to determine the accuracy of information. A numerical value of the check code is a numerical value which is adjusted to a numerical value which can divided with no remainder by a specific numerical value in order to determine the accuracy of the numerical information made up of 26 digits made up of eight digits assigned for the total amount + 10 digits for the receipt issuance data + eight digits for the check code.

The example of generating a character string symbol will be described based on an example of a receipt shown in Fig. 5.

The receipt issuance date is 11 hours 12 minutes, September 10, '08. Next, the total amount is "6912 yen" which is a total of a purchase amount of 1234 yen for a product No. 1 and a purchase amount of 5678 yen for a product No. 2. In addition, the specific numerical value is "99999989." From these, as original numerical values for a character string symbol, the total amount is eight digits of "00006912," and the receipt issuance date is 10 digits of "0809101112." For example, in order that a numerical value of 26 digits of "000069120809101112NNNNNNNN" is made to be a numerical value which is divided by the specific numerical value of "99999989" with no remainder, a numerical value for the check code which is represented by Ns becomes "16251578."

From this fact, "00006912080910111216251578" makes up numerical information to be converted. In order to convert this numerical value into 46 hiragana characters, the numerical value is expressed by the base 46 system. When attempting to express it by the base 46 system, the numerical value is converted into 16 digits of "00:00:01:31:00:09:02:02:23:02:08:37:03:03:38:34." When applying 46 hiragana characters of 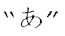 to 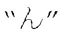 to the respective digits of the numerical value, the numerical value is converted into a character string of 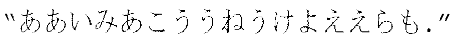 The corner mark character, "∇ (black-painted triangle)," is inserted before a first character, which is a leading character of the character string, after an eighth character, before a ninth character and after a last character. A character string which results after the insertion of the "∇" becomes " "∇" 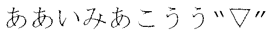 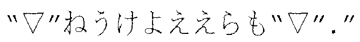 Thereafter, the resulting character string is divided after the "∇" which constitutes the tenth character into two character strings, and the divided row is aligned to the position of the next row, whereby a character string symbol is generated.

The character string symbol so generated is added to information on the receipt written thereon for display. As this occurs, the character string symbol and the information on the receipt are displayed as having at least a blank space equal to a single character provided therebetween. In this way, the character string symbol can be generated from the information on the purchase amount of the products, the receipt issuance date and the like.

Next, an example in which the character string symbol is decoded will be described using the receipt example shown in Fig. 5. As a premise, 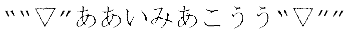 and 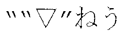 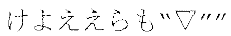 are written, respectively, in a first row and a second row of the character string symbol on the receipt on which the information of the receipt including the character string symbol is written.

The receipt is read by an optical reading apparatus such as a camera, and the corner mark characters, "∇ (black-painted triangle)" and "Δ (black-painted triangle)," are attempted to be found. When the corner mark characters are found, the type of the character string symbol and the character string information are read. In the embodiment, the character string symbol is read such that the type of the character string symbol is the 10 × 2 type, the first row reads 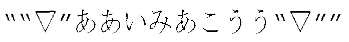 and the second row reads 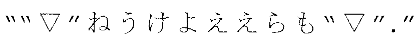 The character information so read is made into one row, and the corner march characters, "∇ (black-painted triangle)," are deleted, whereby the character string of 16 digits of 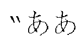 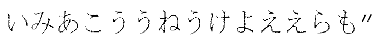 is extracted. When the respective characters 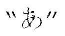 to 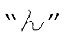 of the character string are replaced by the numerical values "00" to "45," "00:00:01:31:00:09:02:02:23:02:08:37:03:03:38:34" results. This numerical value is the value expressed by the base 46 system, and when this is expressed in the decimal digits, the numerical value is converted into the numerical information of 26 digits of "00006912080910111216251578." In order to determine that this numerical information is the correct numerical value, the numerical information is divided by the specific numerical value of "99999989." In the event that the numerical information can be divided by the specific numerical value with no remainder, the numerical information can be determined as the correct numerical information. In addition, the effective information in this numerical information is "00006912" and "0809101112" and from this information, it can be read that the shopping for 6912 yen was made 11 hours 12 minutes, September 10, '08.

In addition, when a character string symbol is attempted to be generated at random, the probability that the character string symbol so generated can be decoded depends on the digit length of the check code, and in the example described above, the decoding probability is on the order of one 100 millionth, which means that a random generation of character string symbol is not possible.

The following are methods of making use of the character string symbol.

When generating a character string symbol containing payment information on a POS register in a shop, a program for generating character string symbols is introduced in the POS register in advance, and every time payment is made on the POS register, the character string symbol generation program is executed so as to generate a character string symbol. The character string symbol so generated is printed on a receipt by a printer equipped on the POS register.

In addition, when printing character string symbols on pages of leaflets or magazines, a plurality of character string symbols are generated in advance, different character string symbols may be printed on respective magazines, or the same character string symbol may be printed on the respective magazines.

By inputting information containing a displayed or printed character string symbol into a mobile phone with a camera which can incorporate therein a program or on a web page on the internet in the form of information in character strings of the character string symbol, the character string symbol can be decoded into numerical information on the mobile phone or a computer which manages the web page, so that various services including service based on collected points, client information management service and the like can be implemented based on the numerical information.

In addition, by displaying a character string symbol in a telop run while an information program or commercial is broadcast on television, a service can be provided in which a point is given to target viewers who watch the relevant screen. As numerical information that is used in the character string symbol in this case, the titles of the TV program and commercial and the identification number of the telop run are used. The character string symbol displayed on the TV screen can automatically read by a reading apparatus such as a camera or the contents of the character string symbol can be transferred onto a piece of paper. Character string information of the character string symbol that is transferred onto the piece of paper or read by the camera can be inputted on to a web page on the internet or transferred verbally to an operator over a telephone, so that a point service can be provided to target people and a viewer investigation for a specific TV program can be performed in real time and on a larger scale.

In addition, by reading a character string symbol while a radio program is broadcast, a service can be provided in which points are given to target listeners. As numerical information that is used in the character string symbol in this case, by employing the title of the program and an identification number given during the reading, similar services can be implemented to those given by the example in which the character string symbol is displayed on the TV screen. In addition, the information on the character string symbol can be decomposed in arbitrary positions so as to read the character string symbol in a plurality of times.

In addition, by transmitting a message in which a character string symbol is added to a sentence as part of advertisement or questionnaire by direct mail using e-mail, a service can be provided in which points are given to target people. When compared with a case where an image such as a conventional QR code is attached to an e-mail, an e-mail of extremely small capacity can be transmitted, and the character string symbol can be displayed accurately even on the mobile phone in which a limitation is imposed on the number of characters used in a mail to be displayed. In addition, in a character string symbol which is displayed on a mail or the like, numerical information having different identification numbers can be used for respective individuals or e-mails.

Then, by displaying a character string symbol together with an advertisement on a web page on the internet, a service can be provided in which points are given to target people. As numerical information for the character string symbol, the number of the web page and a session number are used, whereby users can accurately be identified.

Thus, by adopting the configuration that has been described heretofore, there can be provided the system, the method and the storage medium which can generate a code of which the user can easily make a copy even though information is encoded, which employs characters which allows the user to convey the encoded contents thereof to others and which can be read at high speeds by a reading apparatus such as a scanner. In addition, while the invention has been described by raising the preferred embodiment, the invention is not limited to the embodiment but can be modified variously within the technical scope which is described in the claims of the invention.

### Industrial Applicability

By adopting the configuration above, the system, the method and the storage medium which can generate a code of which the user can easily make a copy even though information is encoded, which employs characters which allows the user to convey the encoded contents thereof to others and which can be read at high speeds by a reading apparatus such as a scanner.

## Claims

1. A character string symbol generation system for generating a character string symbol which is made up of a plurality of rows of character strings, **characterized by** comprising conversion means for generating a character string from numerical information, mark character inserting means for inserting a total of four corner mark characters of which two are inserted in a first and last position and two in predetermined intermediate positions of a character string generated by the conversion means, character string dividing means for dividing the character string into which the corner mark characters are inserted by the mark character inserting means into a plurality of character strings of the same number of characters, and character string symbol generation means for aligning the character strings which are divided by the character string dividing means into a square formation, so as to generate a character string symbol in which the corner mark characters are disposed in four corners of the square formation of the character strings so aligned.

2. A character string symbol generation system as set forth in Claim 1, **characterized in that** the mark character inserting means inserts a configuration identification character which indicates a type of a character string symbol in a predetermined position of the character string generated by the conversion means together with the corner mark characters.

3. A character string symbol generation system as set forth in Claim 1 or 2, **characterized by** comprising further display means for displaying the character string symbol by a font of equal width in such a way that all characters of the character string symbol become constant in character width and displaying a row pitch which is an interval between rows of character strings and a character pitch which is an interval between a character and a character in each character string in the same width.

4. A character string symbol generation system as set forth in Claim 3, **characterized in that** the display means also performs a display in which a blank space equal to a single character is further provided on the perimeter of the character string symbol generated.

5. A character string symbol generation system as set forth in Claim 1, **characterized in that** the conversion means generates a character string using hiragana characters.

6. A character string symbol generation system as set forth in Claim 3, **characterized in that** the conversion means generates a character string using hiragana characters.

7. A character string symbol generation system as set forth in Claim 1, **characterized in that** the mark character inserting means inserts a triangular mark painted black as the corner mark character and the configuration identification character.

8. A character string symbol generation system as set forth in Claim 2, **characterized in that** the mark character inserting means inserts a triangular mark painted black as the corner mark character and the configuration identification character.

9. A character string symbol generation system as set forth in Claim 3, **characterized in that** the mark character inserting means inserts a triangular mark painted black as the corner mark character and the configuration identification character.

10. A character string symbol generation system as set forth in Claim 6, **characterized in that** the mark character inserting means inserts a triangular mark painted black as the corner mark character and the configuration identification character.

11. A character string generation method for generating a character string symbol which is made up of a plurality of rows of character strings, **characterized by** comprising a conversion step of generating a character string from numerical information, a mark character inserting step of inserting a total of four corner mark characters of which two are inserted in a first and last position and two in predetermined intermediate positions of a character string generated in the conversion step, a character string dividing step of dividing the character string into which the corner mark characters are inserted in the mark character inserting step into a plurality of character strings of the same number of characters, and a character string symbol generation step of aligning the character strings which are divided in the character string dividing step into a square formation, so as to generate a character string symbol in which the corner mark characters are disposed in four corners of the square formation of the character strings so aligned.

12. A character string symbol generation method as set forth in Claim 11, **characterized in that** in the mark character inserting step, a configuration identification character which indicates a type of a character string symbol is inserted in a predetermined position of the character string generated in the conversion step together with the corner mark characters.

13. A character string symbol generation method as set forth in Claim 11 or 12, **characterized by** comprising further a display step of displaying the character string symbol by a font of equal width in such a way that all characters of the character string symbol become constant in character width and displaying a row pitch which is an interval between rows of character strings and a character pitch which is an interval between a character and a character in each character string in the same width.

14. A character string symbol generation method as set forth in Claim 13, **characterized in that** in the display step, a display is performed in which a blank space equal to a single character is further provided on the perimeter of the character string symbol generated.

15. A character string symbol generation method as set forth in Claim 11, **characterized in that** in the conversion step, a character string is generated using hiragana characters.

16. A character string symbol generation method as set forth in Claim 13, **characterized in that** in the conversion step, a character string is generated using hiragana characters.

17. A character string symbol generation method as set forth in Claim 11, **characterized in that** in the mark character inserting step, a triangular mark painted black is inserted as the corner mark character and the configuration identification character.

18. A character string symbol generation method as set forth in Claim 12, **characterized in that** in the mark character inserting step, a triangular mark painted black is inserted as the corner mark character and the configuration identification character.

19. A character string symbol generation method as set forth in Claim 13, **characterized in that** in the mark character inserting step, a triangular mark painted black is inserted as the corner mark character and the configuration identification character.

20. A character string symbol generation method as set forth in Claim 16, **characterized in that** in the mark character inserting step, a triangular mark painted black is inserted as the corner mark character and the configuration identification character.

21. A storage medium which stores therein a program which can be executed by a computer including a character string generation program for generating a character string symbol which is made up of a plurality of rows of character strings, **characterized by** comprising a conversion program for generating a character string from numerical information, a mark character inserting program for inserting a total of four corner mark characters of which two are inserted in a first and last position and two in predetermined intermediate positions of a character string generated by the conversion program, a character string dividing program of dividing the character string into which the corner mark characters are inserted by the mark character inserting program into a plurality of character strings of the same number of characters, and a character string symbol generation program of aligning the character strings which are divided by the character string dividing program into a square formation, so as to generate a character string symbol in which the corner mark characters are disposed in four corners of the square formation of the character strings so aligned.

22. A storage medium which stores therein a program which can be executed by a computer including a character string generation program for generating a character string symbol as set forth in Claim 21, **characterized in that** the mark character inserting program inserts a configuration identification character which indicates a type of a character string symbol in a predetermined position of the character string generated by the conversion program together with the corner mark characters.

23. A storage medium which stores therein a program which can be executed by a computer including a character string generation program for generating a character string symbol as set forth in Claim 21 or 22, **characterized by** comprising further a display program for displaying the character string symbol by a font of equal width in such a way that all characters of the character string symbol become constant in character width and displaying a row pitch which is an interval between rows of character strings and a character pitch which is an interval between a character and a character in each character string in the same width.

24. A storage medium which stores therein a program which can be executed by a computer including a character string generation program for generating a character string symbol as set forth in Claim 23, **characterized in that** the display program performs a display in which a blank space equal to a single character is further provided on the perimeter of the character string symbol generated.

25. A storage medium which stores therein a program which can be executed by a computer including a character string generation program for generating a character string symbol as set forth in Claim 21, **characterized in that** the conversion program generates a character string using hiragana characters.

26. A storage medium which stores therein a program which can be executed by a computer including a character string generation program for generating a character string symbol as set forth in Claim 23, **characterized in that** the conversion program generates a character string using hiragana characters.

27. A storage medium which stores therein a program which can be executed by a computer including a character string generation program for generating a character string symbol as set forth in Claim 21, **characterized in that** in the mark character inserting program inserts a triangular mark painted black as the corner mark character and the configuration identification character.

28. A storage medium which stores therein a program which can be executed by a computer including a character string generation program for generating a character string symbol as set forth in Claim 22, **characterized in that** in the mark character inserting program inserts a triangular mark painted black as the corner mark character and the configuration identification character.

29. A storage medium which stores therein a program which can be executed by a computer including a character string generation program for generating a character string symbol as set forth in Claim 23, **characterized in that** in the mark character inserting program inserts a triangular mark painted black as the corner mark character and the configuration identification character.

30. A storage medium which stores therein a program which can be executed by a computer including a character string generation program for generating a character string symbol as set forth in Claim 26, **characterized in that** in the mark character inserting program inserts a triangular mark painted black as the corner mark character and the configuration identification character.
